# EUROPEAN PATENT APPLICATION

(11) **EP 1 452 711 A2**
(43) Date of publication of application: **01.09.2004**
(21) Application number: 03028729.6
(22) Date of filing: 12.12.2003
(51) Int. Cl.: F02D 35/00, F02D 41/40, F02D 41/34

(54) **Diesel engine and method of controlling the same**

(30) Priority: 28.02.2003 JP 2003054583
(71) Applicant: Mitsubishi Heavy Industries, Ltd., Tokyo (JP); Nabco Limited, Kobe-shi, Hyogo 651-2271 (JP)
(72) Inventor: Matsuo, Minoru, c/o Takasago Res & Dev Centre, 2-chome, Takasago Hyogo-ken (JP); Sonoda,Takashi, c/o Takasago Res & Dev Centre, 2-chome, Takasago Hyogo-ken (JP); Sugihara, Masahide, 1-1-1 Wadasaki Hyogo-ku Kobe Hyogo-ken (JP); Edo, Koji, 1-1-1 Wadasaki Hyogo-ku Kobe Hyogo-ken (JP); Maeda, Takayoshi, c/o Seishin Factory of Nabco Ltd, Kobe-shi Hyogo (JP); Kita, Yoshiyuki, Nishi-ku Kobe-shi Hyogo (JP); Amo, Tetsuya, Nishi-ku Kobe-shi Hyogo (JP); Kobayashi, Yasunaga, Nishi-ku Kobe-shi Hyogo (JP)
(74) Representative: HOFFMANN - EITLE

(57) **Abstract**

A diesel engine includes a cylinder section (10) and also includes a shared hydraulic source (13A) for driving at least one of a fuel jet system (11) and an exhaust valve system (12), and a boost section (13B). Based on a boost piston lift signal for each cylinder, which is output from the boost section (13B), the drive time of an electromagnetic valve relating to the fuel jet system (11) for each cylinder in the cylinder section (10) is adjusted.

## Description

The present invention relates generally to a diesel engine and a method of controlling the diesel engine, and more particularly to an electronically controlled diesel engine and a method of controlling the same.

In diesel engines, in order to ensure reliability, it is important to eliminate variance in the fuel jets amount among cylinders.

In an electronically controlled diesel engine, however, unlike a cam-type diesel engine, a fuel jet is effected by using an electromagnetic valve. Consequently, depending on a variation in responsivity of the electromagnetic valve, the jet amount may vary day by day. In addition, since characteristics vary depending on loads, it is difficult to reduce variance in fuel jet amount by a manual control.

Jpn. Pat. Appln. KOKAI Publication No. 8-210172 (Patent Document 1) discloses a method of correcting fuel jet timing in an electronically controlled diesel engine.

However, the method of Patent Document 1 aims at compensating for an error in fuel jet timing, which occurs due to aging of the jet nozzle, etc. It is assumed that there are cases where this method cannot suppress day-by-day variation in fuel jet amount or variance in fuel jet amount due to load.

The object of the present invention is to provide a diesel engine and a method of controlling the same, which can suppress day-by-day variation in fuel jet amount or variance in fuel jet amount due to load.

In order to solve the problem and achieve the object, the inventor studied factors of such day-by-day variation in fuel jet amount or variance in fuel jet amount due to load.

The inventor paid attention to the fact that the problem often occurs in large-scale diesel engines for use in ships. The inventor thus studied a hydraulic drive means, such as a boost piston type fuel jet system, which drives at least one of a fuel jet system and an exhaust valve system, and which is provided in the large-scale engine of ships or the like.

The study showed that even if the electromagnetic valve is electronically controlled according to a regular method, a delay in operation of the hydraulic drive means, for instance, occurs. As a result, day-by-day variation in fuel jet amount occurs due to variation in responsivity of the electromagnetic valve, or variance in fuel jet amount occurs due to load.

In the present invention, at least one of the operation of the fuel jet system for each cylinder and the engine state amount is monitored, and the drive time of the electromagnetic valve relating to the fuel jet system for each cylinder is adjusted in accordance with the monitor output, thereby eliminating variance in fuel jet amount due to responsivity of the electromagnetic valve and load.

In this invention, a signal relating to the operation of a boost piston lift provided in hydraulic drive means is detected, and thereby the operation of the electromagnetic valve relating to the fuel jet system is monitored. It is assumed that the signals representing the engine state amount may be signals representing engine state amounts that change due to fuel jet amount, for example, exhaust temperature, outlet temperature of cylinder cooling water, and outlet temperature of piston cooling oil. One of these signals or a combination of these signals may be substituted as a monitor output for the signal relating to the operation of the boost piston lift.

A specific control mode may include sampling a monitor output at a predetermined cycle, calculating a sum of sampling values during a drive time of the electromagnetic valve, performing a proportional integral control arithmetic operation in which an average value of the sum of sampling values is used as a setting value such that the sum of sampling values of all cylinders may become uniform and in which the sum of sampling values of each cylinder is used as a control amount, and adjusting the drive time of the electromagnetic valve. Thereby, variance in fuel jet amount among cylinders can be suppressed.

Another control mode may include sampling a monitor output at a predetermined cycle and reading a peak value of the monitor output, estimating a sum of sampling values sampled at a longer cycle by using a template representing the tendency of variation in the boost piston lift during the drive time of the electromagnetic valve, performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount, and adjusting the drive time of the electromagnetic valve. Thereby, without performing high-speed sampling (about 0.1 ms), variance in fuel jet amount among the cylinders can be suppressed.

Still another control mode may include reading a peak value of a monitor output, performing a proportional integral control arithmetic operation in which an average value of the peak values is used as a setting value such that the peak values of all cylinders may become uniform and in which the peak value of each cylinder is used as a control amount, and adjusting the drive time of the electromagnetic valve. Thereby, even in the case where only a slower sampling than in the preceding control modes can be performed, the variance in fuel jet amount among the cylinders can be suppressed by the addition of a peak hold circuit.

The above control modes aim at suppressing variance in fuel jet amount among the pistons. However, even if the variance in fuel jet amount is suppressed by the above-described control, it is possible that variance occurs in engine exhaust temperature among the pistons. In such a case, the invention may adopt a control mode including sampling a monitor output at a predetermined cycle, calculating a sum of sampling values during a drive time of an electromagnetic valve relating to the fuel jet system, performing a proportional integral control arithmetic operation in which a target value determined according to characteristics of each cylinder is used as a setting value and a sum of sampling values for each cylinder is used as a control amount, and adjusting the drive time of the electromagnetic valve. Thereby, variance in engine exhaust temperature can be suppressed.

Similarly, even if variance in fuel jet amount is suppressed, it is possible that variance occurs in engine exhaust temperature among the pistons. In such a case, the invention may adopt a control mode including sampling a monitor output at a predetermined cycle, reading a peak value of the monitor output, estimating a sum of sampling values sampled at a longer cycle by using a template representing a tendency of variation in a boost piston lift during a drive time of an electromagnetic valve relating to the fuel jet system, performing a proportional integral control arithmetic operation in which a target value determined according to characteristics of each cylinder is used as a setting value and the estimated sum of sampling values for each cylinder is used as a control amount, and adjusting the drive time of the electromagnetic valve. Thereby, variance in engine exhaust temperature can be suppressed.

Similarly, even if variance in fuel jet amount is suppressed, it is possible that variance occurs in engine exhaust temperature among the pistons. In such a case, the invention may adopt a control mode including reading a peak value of a monitor output, performing a proportional integral control arithmetic operation in which a target value determined according to characteristics of each cylinder is used as a setting value and the peak value for each cylinder is used as a control amount, and adjusting a drive time of an electromagnetic valve relating to the fuel jet system. Thereby, variance in engine exhaust temperature can be suppressed.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows the structure of a first embodiment of a diesel engine according to the present invention;
FIG. 2 is a view for explaining the operation of the first embodiment;
FIG. 3 is a flowchart illustrating a method of controlling the diesel engine of the first embodiment;
FIG. 4 shows the structure of a second embodiment of the diesel engine according to the present invention;
FIG. 5 is a view for explaining the operation of the second embodiment;
FIG. 6 is a flow chart illustrating a method of controlling the diesel engine of the second embodiment;
FIG. 7 shows the structure of a third embodiment of the diesel engine according to the present invention;
FIG. 8 is a view for explaining the operation of the third embodiment;
FIG. 9 is a flowchart illustrating a method of controlling the diesel engine of the third embodiment;
FIG. 10 shows the structure of a fourth embodiment of the diesel engine according to the present invention; and
FIG. 11 shows the structure of a fifth embodiment of the diesel engine according to the present invention.

### (First Embodiment)

A first embodiment of the diesel engine according to the present invention will now be described with reference to the accompanying drawings.

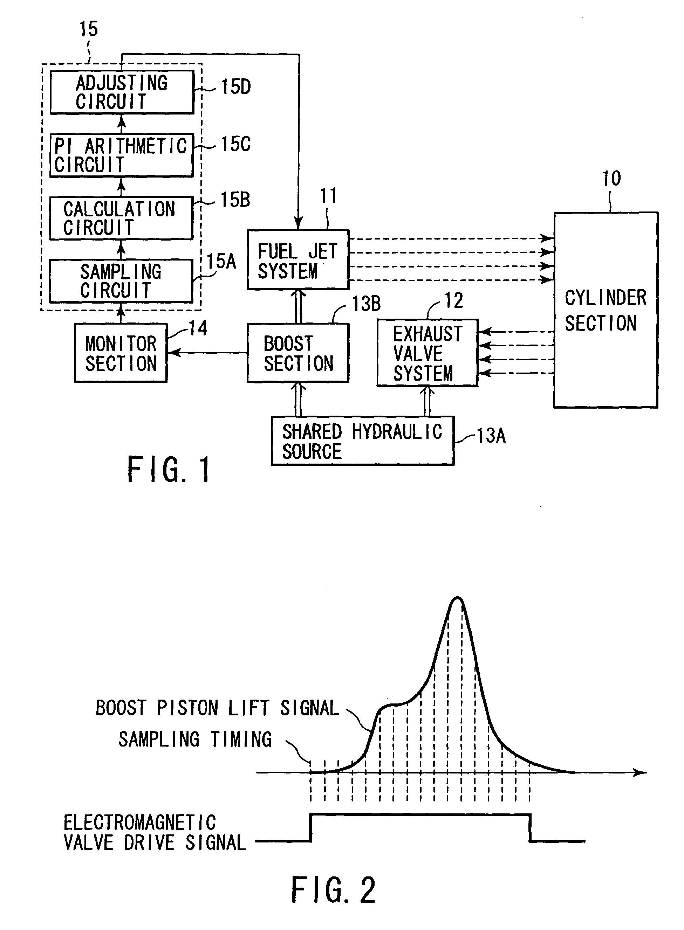

As is shown in FIG. 1, this embodiment is applied to a diesel engine wherein fuel jet is performed by using an electronically controlled electromagnetic valve. A cylinder section 10 having a plurality of cylinders is provided with a fuel jet system 11 and an exhaust valve system 12. In addition, a hydraulic drive means peculiar to a large-scale electronically controlled engine is provided. This means includes, for instance, a shared hydraulic source 13A and a pressure boost section 13B. A boost piston (not shown) of the pressure boost section 13B is driven by the shared hydraulic source 13A, thereby achieving high efficiency of fuel jet and high reliability of the exhaust valve.

The present embodiment includes a monitor section 14 that detects a signal relating to the operation of a boost piston lift provided in the pressure boost section 13B. In accordance with a monitor output of the monitor section 14, an adjusting section 15 adjusts the drive time of the electromagnetic valve relating to the fuel jet system 11 for each cylinder.

The adjusting section 15 comprises a sampling circuit 15A that samples at a predetermined cycle a signal relating to the operation of the boost piston lift, as shown in FIG. 2; a calculation circuit 15B that calculates a sum of sampling values during a drive time of the electromagnetic valve; a PI (proportional integral control) arithmetic circuit 15C that performs a proportional integral control arithmetic operation in which an average value of the sum of sampling values is used as a setting value such that the sum of sampling values of all cylinders may become uniform and in which the sum of sampling values of each cylinder is used as a control amount; and an adjusting circuit 15D that adjusts the drive time of the electromagnetic valve on the basis of the output of the PI (proportional integral control) arithmetic circuit 15C. The adjusting circuit 15D produces an electromagnetic valve drive signal shown in FIG. 2.

Prior to arriving at the above-described structure, the inventor of this invention paid attention to the fact that a cause of a day-by-day variance in fuel jet amount or a variance in fuel jet amount due to loads is often found in large-scale diesel engines for use in ships. The inventor thus studied a hydraulic drive means, such as a boost piston type fuel jet system, which drives at least one of a fuel jet system and an exhaust valve system, and which is provided in the large-scale engine of ships or the like. The study showed that even if the electromagnetic valve is electronically controlled according to a regular method, a delay in operation of the hydraulic drive means, for instance, occurs. As a result, a day-by-day variation in fuel jet amount occurs due to a variation in responsivity of the electromagnetic valve, or a variance in fuel jet amount occurs due to loads.

The present embodiment includes sampling at a predetermined cycle a signal relating to the operation of the boost piston lift of each cylinder; calculating a sum of sampling values during a drive time of the electromagnetic valve; performing a proportional integral control arithmetic operation in which an average value of the sum of sampling values is used as a setting value such that the sum of sampling values of all cylinders may become uniform and in which the sum of sampling values of each cylinder is used as a control amount; and adjusting the drive time of the electromagnetic valve. Thereby, the variance in fuel jet amount among the cylinders can be suppressed.

In the above-described embodiment, it is assumed that the adjusting section 15 is formed of hardware. Alternatively, it may be formed of software or a program executed by a computer, etc.

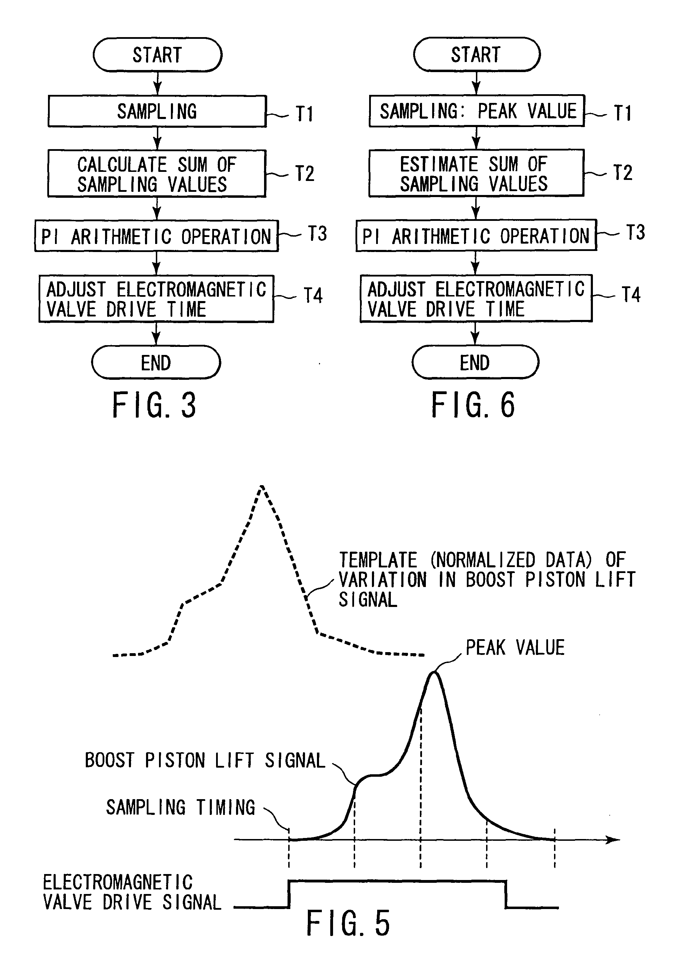

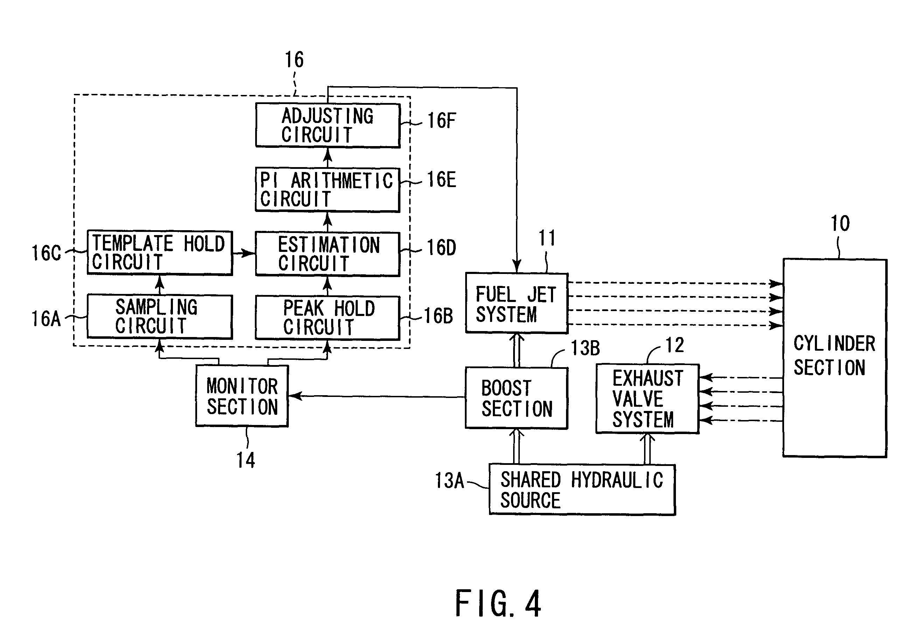

FIG. 3 is a flow chart illustrating the function of the adjusting section 15, which is realized by software, a program, etc. The function of the adjusting section 15 includes a step S1 of sampling at a predetermined cycle a signal relating to the operation of the boost piston lift; a step S2 of calculating a sum of sampling values during a drive time of the electromagnetic valve; a step S3 of performing a proportional integral (PI) control arithmetic operation in which an average value of the sum of sampling values is used as a setting value such that the sum of sampling values of all cylinders may become uniform and in which the sum of sampling values of each cylinder is used as a control amount; and a step S4 of adjusting the drive time of the electromagnetic valve on the basis of this PI output.

### (Second Embodiment)

A diesel engine according to a second embodiment of the present invention will now be described with reference to FIGS. 4 to 6. In FIGS. 4 to 6, the parts common to those in FIGS. 1 to 3 are denoted by like reference numerals.

In the second embodiment, as shown in FIG. 4, like the first embodiment, there is provided a monitor section 14 that detects a signal relating to the operation of a boost piston lift provided in the pressure boost section 13B. In accordance with a monitor output of the monitor section 14, an adjusting section 16 adjusts the drive time of the electromagnetic valve relating to the fuel jet system 11 for each cylinder.

The adjusting section 16 comprises a sampling circuit 16A that samples at a predetermined cycle a signal relating to the operation of the boost piston lift, as shown in FIG. 5; a peak hold circuit 16B that reads a peak value of the signal relating to the operation of the boost piston lift; a template hold circuit 16C that holds a plurality of templates representing the tendencies of variation in the boost piston lift during the drive time of the electromagnetic valve; an estimation circuit 16D that retrieves a template from the template hold circuit 16C, as shown in FIG. 5, and estimates a sum of sampling values sampled at a longer cycle by using the template; a PI (proportional integral control) arithmetic circuit 16E that performs a proportional integral control arithmetic operation in which an average value of the estimated sum of sampling values is used as a setting value such that the estimated sum of sampling values of all cylinders may become uniform and in which the estimated sum of sampling values of each cylinder is used as a control amount; and an adjusting circuit 16F that adjusts the drive time of the electromagnetic valve on the basis of the output of the PI (proportional integral control) arithmetic circuit 16E. The adjusting circuit 16F produces an electromagnetic valve drive signal shown in FIG. 5.

The present embodiment includes sampling at a predetermined cycle a signal relating to the operation of the boost piston lift of each cylinder; calculating a sum of sampling values during a drive time of the electromagnetic valve; performing a proportional integral control arithmetic operation in which an average value of the sum of sampling values is used as a setting value such that the sum of sampling values of all cylinders may become uniform and in which the sum of sampling values of each cylinder is used as a control amount; and adjusting the drive time of the electromagnetic valve. Thereby, the variance in fuel jet amount among the cylinders can be suppressed. In this case, without performing high-speed sampling (about 0.1 ms), the variance in fuel jet amount among the cylinders can be suppressed.

In the above-described embodiment, it is assumed that the adjusting section 16 is formed of hardware. Alternatively, it may be formed of software or a program executed by a computer, etc. FIG. 6 is a flow chart illustrating the function of the adjusting section 16, which is realized by software, a program, etc. The function of the adjusting section 16 includes a step T1 of sampling at a predetermined cycle a signal relating to the operation of the boost piston lift and reading a peak value of the signal; a step T2 of estimating, based on the sampling values and the peak value, a sum of sampling values sampled at a longer cycle by using a template representing the tendency of variation in the boost piston lift during the drive time of the electromagnetic valve; a step T3 of performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount; and a step T4 of adjusting the drive time of the electromagnetic valve on the basis of the PI output.

### (Third Embodiment)

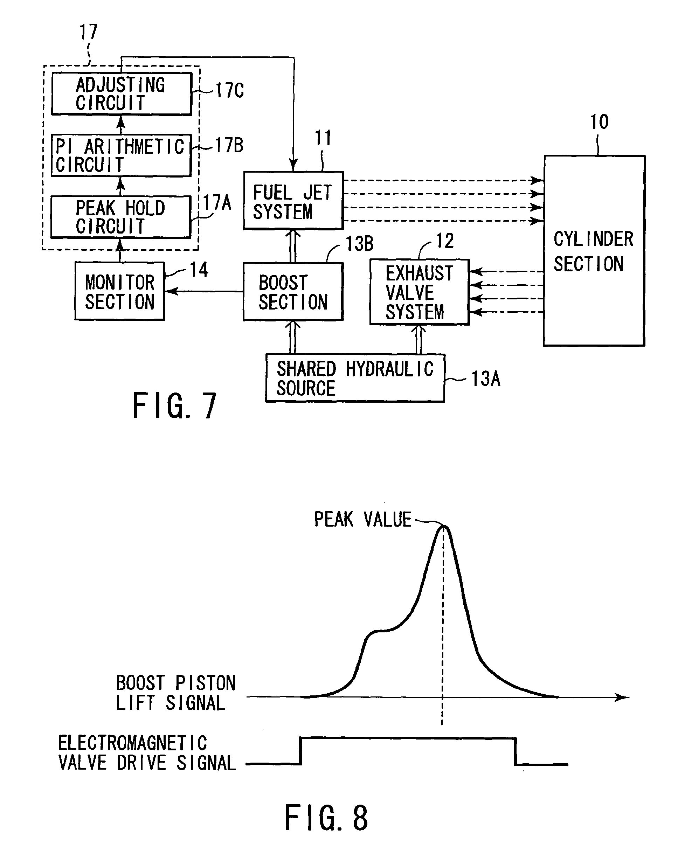

A diesel engine according to a third embodiment of the present invention will now be described with reference to FIGS. 7 to 9. In FIGS. 7 to 9, the parts common to those in FIGS. 1 to 6 are denoted by like reference numerals.

In the third embodiment, as shown in FIG. 7, like the first and second embodiments, there is provided a monitor section 14 that detects a signal relating to the operation of a boost piston lift provided in the pressure boost section 13B. In accordance with a monitor output of the monitor section 14, an adjusting section 17 adjusts the drive time of the electromagnetic valve relating to the fuel jet system 11 for each cylinder.

The adjusting section 17 comprises a peak hold circuit 17A that obtains a peak value of a signal relating to the operation of the boost piston lift, as shown in FIG. 7; a PI (proportional integral control) arithmetic circuit 17B that reads peak values from the peak hold circuit 17A and performs a proportional integral control arithmetic operation in which an average value of the peak values is used as a setting value such that the peak values of all cylinders may become uniform and in which the peak value of each cylinder is used as a control amount; and an adjusting circuit 17C that adjusts the drive time of the electromagnetic valve on the basis of the output of the PI (proportional integral control) arithmetic circuit 17B. The adjusting circuit 17C produces an electromagnetic valve drive signal shown in FIG. 8.

The present embodiment includes reading a peak value of a signal relating to the operation of the boost piston lift, performing a proportional integral control arithmetic operation in which an average value of the peak values is used as a setting value such that the peak values of all cylinders may become uniform and in which the peak value of each cylinder is used as a control amount, and adjusting the drive time of the electromagnetic valve. Thereby, the variance in fuel jet amount among the cylinders can be suppressed. Even in the case where high-speed sampling (about 0.1 ms) is not performed and only a slower sampling than in the preceding embodiments can be performed, the variance in fuel jet amount among the cylinders can be suppressed by the addition of the peak hold circuit.

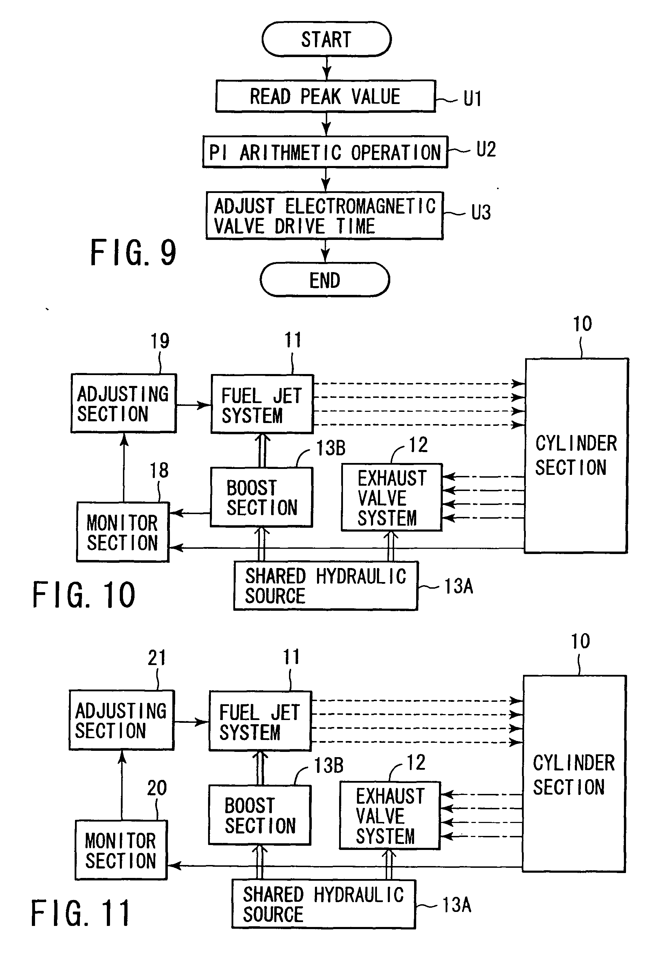

In the above-described embodiment, it is assumed that the adjusting section 17 is formed of hardware. Alternatively, it may be formed of software or a program executed by a computer, etc. FIG. 9 is a flow chart illustrating the function of the adjusting section 17, which is realized by software, a program, etc. The function of the adjusting section 17 includes a step U1 of reading a peak value of a signal relating to the operation of the boost piston lift for each cylinder, a step of U2 of performing a proportional integral control arithmetic operation in which an average value of the peak values is used as a setting value such that the peak values of all cylinders may become uniform and in which the peak value of each cylinder is used as a control amount, and a step U3 of adjusting the drive time of the electromagnetic valve on the basis of the PI output.

### (Fourth Embodiment)

A diesel engine according to a fourth embodiment of the present invention will now be described with reference to FIG. 10. In FIG. 10, the parts common to those in FIGS. 1 to 9 are denoted by like reference numerals.

In the fourth embodiment, as shown in FIG. 10, there is provided a monitor section 18 that detects a signal relating to the operation of a boost piston lift provided in the pressure boost section 13B, like the first and second embodiments, and detects a signal relating to the operation of the cylinder section 10. In accordance with a monitor output of the monitor section 18, an adjusting section 19 adjusts the drive time of the electromagnetic valve relating to the fuel jet system 11 for each cylinder. It is assumed that the signal relating to the operation of the cylinder section 10 may be a signal representing an engine state amount that changes due to a fuel jet amount, for example, an exhaust temperature, an outlet temperature of cylinder cooling water, or an outlet temperature of a piston cooling oil.

The adjusting section 19 may adopt one of the three modes: i) sampling a monitor output at a predetermined cycle, calculating a sum of sampling values during a drive time of the electromagnetic valve, performing a proportional integral control arithmetic operation in which an average value of the sum of sampling values is used as a setting value such that the sum of sampling values of all cylinders may become uniform and in which the sum of sampling values of each cylinder is used as a control amount, and adjusting the drive time of the electromagnetic valve; ii) sampling a monitor output at a predetermined cycle and reading a peak value of the monitor output, estimating a sum of sampling values sampled at a longer cycle by using a template representing the tendency of variation in the boost piston lift during the drive time of the electromagnetic valve, performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount, and adjusting the drive time of the electromagnetic valve on the basis of the PI output; and iii) reading a peak value of a monitor output, performing a proportional integral control arithmetic operation in which an average value of the peak values is used as a setting value such that the peak values of all cylinders may become uniform and in which the peak value of each cylinder is used as a control amount, and adjusting the drive time of the electromagnetic valve.

### (Fifth Embodiment)

A diesel engine according to a fifth embodiment of the present invention will now be described with reference to FIG. 11. In FIG. 11, the parts common to those in FIGS. 1 to 10 are denoted by like reference numerals.

In the fifth embodiment, as shown in FIG. 11, there is provided a monitor section 20 that detects a signal relating to the operation of the cylinder section 10, like the fourth embodiment. In accordance with a monitor output of the monitor section 20, an adjusting section 21 adjusts the drive time of the electromagnetic valve relating to the fuel jet system 11 for each cylinder. It is assumed that the signal relating to the operation of the cylinder section 10 may be a signal representing an engine state amount that changes due to a fuel jet amount, for example, an exhaust temperature, an outlet temperature of cylinder cooling water, or an outlet temperature of a piston cooling oil.

The adjusting section 21 may adopt one of the three modes: i) sampling a monitor output at a predetermined cycle, calculating a sum of sampling values during a drive time of the electromagnetic valve, performing a proportional integral control arithmetic operation in which an average value of the sum of sampling values is used as a setting value such that the sum of sampling values of all cylinders may become uniform and in which the sum of sampling values of each cylinder is used as a control amount, and adjusting the drive time of the electromagnetic valve; ii) sampling a monitor output at a predetermined cycle and reading a peak value of the monitor output, estimating a sum of sampling values sampled at a longer cycle by using a template representing the tendency of variation in the boost piston lift during the drive time of the electromagnetic valve, performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount, and adjusting the drive time of the electromagnetic valve; and iii) reading a peak value of a monitor output, performing a proportional integral control arithmetic operation in which an average value of the peak values is used as a setting value such that the peak values of all cylinders may become uniform and in which the peak value of each cylinder is used as a control amount, and adjusting the drive time of the electromagnetic valve.

### (Other Embodiments)

The present invention is not limited to the above-described embodiments.

For example, the present invention may be configured such that the adjusting sections of the first to third embodiments are combined to carry out the proportional integral control arithmetic operation, thereby adjusting the drive time of the electromagnetic valve.

Even where the variance in fuel jet amount is suppressed by the above-described control, it is possible that a variance occurs in engine exhaust temperature. In such a case, this invention may adopt the following control modes.

In a case where a diesel engine includes a plurality of cylinders and hydraulic drive means for driving a fuel jet system, a control mode includes monitoring at least one of the operation of the fuel jet system for each cylinder and an engine state amount in the hydraulic drive means, sampling a monitor output at a predetermined cycle, calculating a sum of sampling values during a drive time of an electromagnetic valve relating to the fuel jet system, performing a proportional integral control arithmetic operation in which a target value determined according to characteristics of each cylinder is used as a setting value and a sum of sampling values for each cylinder is used as a control amount, and adjusting the drive time of the electromagnetic valve.

Alternatively, a control mode includes monitoring at least one of the operation of a fuel jet system for each cylinder and an engine state amount in hydraulic drive means, sampling a monitor output at a predetermined cycle, reading a peak value of the monitor output, estimating a sum of sampling values sampled at a longer cycle by using a template representing a tendency of variation in a boost piston list during a drive time of an electromagnetic valve relating to the fuel jet system, performing a proportional integral control arithmetic operation in which a target value determined according to characteristics of each cylinder is used as a setting value and the estimated sum of sampling values for each cylinder is used as a control amount, and adjusting the drive time of the electromagnetic valve.

Alternatively, a control mode includes monitoring at least one of the operation of a fuel jet system for each cylinder and an engine state amount in hydraulic drive means, reading a peak value of a monitor output, performing a proportional integral control arithmetic operation in which a target value determined according to characteristics of each cylinder is used as a setting value and the peak value for each cylinder is used as a control amount, and adjusting a drive time of an electromagnetic valve relating to the fuel jet system.

By the above-described proportional integral control, a variance in engine exhaust temperature can be suppressed.

In the above-described embodiments, the proportional integral control arithmetic operation is carried out on the basis of the sampling values or peak value, thereby adjusting the drive time of the electromagnetic valve. Alternatively, other feedback control can be adopted.

The proportional integral control arithmetic operation may be replaced with a technique wherein a table is provided for storing correction data relating to an adjusted drive time of the electromagnetic valve, and the correction data is retrieved from the table in accordance with the monitor output, thereby adjusting the drive time of the electromagnetic valve. As regards a variation in load, the inventor of this invention confirmed that the degree of variation in fuel jet amount changes between a low load time and a high load time. In this case, different correction data is provided for the low load time and the high load time. Thereby, an optimal fuel jet amount can be secured.

In the above-described example of the hydraulic drive means, the shared hydraulic source 13A drives both the fuel jet system 11 and exhaust valve system 12. Alternatively, the present invention is applicable to a diesel engine having hydraulic drive means with a hydraulic source that drives one of the fuel jet system 11 and exhaust valve system 12. In this case, the monitor section receives, instead of a signal relating to the operation of the boost piston lift, some other signal that changes with time during the drive time of the electromagnetic valve, and the same control as described above is performed. Examples of such some other signal are signals representing engine state amounts relating to the operation of the cylinder section. It is assumed that the signals representing the engine state amount may be signals representing engine state amounts that change due to a fuel jet amount, for example, an exhaust temperature, an outlet temperature of cylinder cooling water, and an outlet temperature of a piston cooling oil. One of these signals or a combination of these signals may be substituted as a monitor output for the signal relating to the operation of the boost piston lift.

The time or timing of the above-described control modes is not limited. For example, the control modes are not limited to a real-time control, or a specified-time control (e.g. at the start of operation).

According to the present invention, at least one of the operation of the fuel jet system for each cylinder and the engine state amount is monitored, and the drive time of the electromagnetic valve relating to the fuel jet system for each cylinder is adjusted in accordance with the monitor output. Thereby, a diesel engine and a control method therefor, which can suppress a variance in fuel jet amount due to responsivity of the electromagnetic valve and loads, can be provided.

## Claims

1. A diesel engine in which jet of fuel to a plurality of cylinders is controlled by an electronically controlled electromagnetic valve, **characterized by** comprising:
monitor means (14) for monitoring at least one of an operation of a fuel jet system for each cylinder and an engine state amount; and
adjusting means (15) for adjusting a drive time of the electromagnetic valve relating to the fuel jet system of each cylinder in accordance with a monitor output from the monitor means (14).

2. A diesel engine according to claim 1, **characterized by** further comprising hydraulic drive means (13A, 13B) for driving the fuel jet system.

3. A diesel engine according to claim 2, **characterized in that** the monitor means (14) includes means for detecting a signal relating to an operation of a boost piston lift in the hydraulic drive means (13A, 13B).

4. A diesel engine according to claim 1 or 2, **characterized in that** the adjusting means (15) includes means for sampling the monitor output at a predetermined cycle, calculating a sum of sampling values during the drive time of the electromagnetic valve, performing a proportional integral control arithmetic operation in which an average value of the sum of sampling values is used as a setting value such that the sum of sampling values of all cylinders may become uniform and in which the sum of sampling values of each cylinder is used as a control amount, and adjusting the drive time of the electromagnetic valve.

5. A diesel engine according to claim 1 or 2, **characterized in that** the adjusting means (15) includes means for sampling the monitor output at a predetermined cycle and reading a peak value of the monitor output, estimating a sum of sampling values sampled at a longer cycle by using a template representing the tendency of variation in a boost piston lift during the drive time of the electromagnetic valve, performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount, and adjusting the drive time of the electromagnetic valve.

6. A diesel engine according to claim 1 or 2, **characterized in that** the adjusting means (15) includes means for reading a peak value of the monitor output, performing a proportional integral control arithmetic operation in which an average value of peak values of all cylinders is used as a setting value such that the peak values of all cylinders may become uniform and in which the peak value of each cylinder is used as a control amount, and adjusting the drive time of the electromagnetic valve.

7. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
sampling the monitor output at a predetermined cycle, calculating a sum of sampling values during a drive time of an electromagnetic valve relating to the fuel jet system, performing a proportional integral control arithmetic operation in which an average value of the sum of sampling values is used as a setting value such that the sum of sampling values of all cylinders may become uniform and in which the sum of sampling values of each cylinder is used as a control amount, and adjusting the drive time of the electromagnetic valve.

8. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
sampling the monitor output at a predetermined cycle and reading a peak value of the monitor output, estimating a sum of sampling values sampled at a longer cycle by using a template representing the tendency of variation in a boost piston lift during the drive time of the electromagnetic valve relating to the fuel jet system, performing a proportional integral control arithmetic operation in which an average value of the estimated sum of sampling values is used as a setting value such that the estimated sum of sampling values of all cylinders may become uniform and in which the estimated sum of sampling values of each cylinder is used as a control amount, and adjusting the drive time of the electromagnetic valve.

9. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
reading a peak value of the monitor output, performing a proportional integral control arithmetic operation in which an average value of peak values of all cylinders is used as a setting value such that the peak values of all cylinders may become uniform and in which the peak value of each cylinder is used as a control amount, and adjusting the drive time of the electromagnetic valve.

10. A control method for a diesel engine according to any one of claims 7 to 9, **characterized in that** the monitor output is a signal relating to an operation of a boost piston lift in the hydraulic drive means (13A, 13B).

11. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
sampling a monitor output at a predetermined cycle, calculating a sum of sampling values during a drive time of an electromagnetic valve relating to the fuel jet system, performing a proportional integral control arithmetic operation in which a target value determined according to characteristics of each cylinder is used as a setting value and a sum of sampling values for each cylinder is used as a control amount, and adjusting the drive time of the electromagnetic valve.

12. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
sampling a monitor output at a predetermined cycle, reading a peak value of the monitor output, estimating a sum of sampling values sampled at a longer cycle by using a template representing a tendency of variation in a boost piston lift during a drive time of an electromagnetic valve relating to the fuel jet system, performing a proportional integral control arithmetic operation in which a target value determined according to characteristics of each cylinder is used as a setting value and the estimated sum of sampling values for each cylinder is used as a control amount, and adjusting the drive time of the electromagnetic valve.

13. A control method for a diesel engine having a plurality of cylinders and having hydraulic drive means (13A, 13B) for driving a fuel jet system, **characterized by** comprising:
monitoring at least one of an operation of the fuel jet system for each cylinder and an engine state amount in the hydraulic drive means (13A, 13B); and
reading a peak value of a monitor output, performing a proportional integral control arithmetic operation in which a target value determined according to characteristics of each cylinder is used as a setting value and the peak value for each cylinder is used as a control amount, and adjusting a drive time of an electromagnetic valve relating to the fuel jet system.
